# FASCICULE DE BREVET EUROPEEN

(11) **EP 1 199 199 B1**
(45) Date de publication et mention de la délivrance du brevet: **03.12.2003**
(21) Numéro de dépôt: 01402675.1
(22) Date de dépôt: 17.10.2001
(51) Int. Cl.: B60H 3/06, F24F 3/16, B01D 46/42

(54) **Dispositif de filtration destiné à équiper un appareil d'aération et/ou de chauffage et/ou de climatisation, notamment pour véhicule automobile, et adapté à réduire la vitesse de propagation d'une flamme**
Filtervorrichtung für eine Klimaanlage, insbesondere für Kraftfahrzeuge und zur Verminderung der Ausbreitung von Feuer
Filtering device for air conditioners, in particular for vehicles, and reducing the propagation of fire

(30) Priorité: 18.10.2000 FR 0013325
(43) Date de publication de la demande: 24.04.2002
(73) Titulaire: Valeo Matériaux de Friction, 87020 Limoges cedex 9 (FR)
(72) Inventeur: Adamczak, Loic, 87110 Bosmie L'Aiguille (FR)
(74) Mandataire: Lemaire, Marc

(56) Documents cités:
- WO-A-96/19279
- DE-A- 19 708 260
- FR-A- 2 772 670
- FR-A- 2 806 318
- US-A- 4 708 724
- US-A- 5 840 094

## Description

La présente invention a pour objet un dispositif de filtration destiné à équiper un appareil d'aération et/ou de chauffage et/ou de climatisation, notamment pour véhicule automobile. FR 2 772 670 décrit un tel dispositif conforme au préambule de la première revendication.

Un dispositif de filtration comporte une grille avantageusement plissée contre laquelle est disposé un média filtrant formant filtre à particules, le média filtrant est lui-même plissé de la même manière que la grille.

Il est connu d'utiliser de l'oxyde d'antimoine comme produit retardateur de flammes dans des dispositifs de filtration comportant au moins un média filtrant et une grille, l'oxyde d'antimoine étant ajouté à la composition de la grille généralement réalisée en polypropylène.

L'oxyde d'antimoine est un produit toxique soumis à une réglementation stricte. De plus, lorsqu'il est utilisé comme retardateur de flammes, il faut ajouter par exemple des dérivés halogénés qui consomment l'oxygène lorsqu'il y a combustion.

Le but de l'invention est de proposer un tel dispositif de filtration adapté à réduire la vitesse de propagation d'une flamme de manière simple, économique et écologique.

Selon l'invention, un dispositif de filtration destiné à équiper un appareil d'aération et/ou de chauffage et/ou de climatisation, notamment pour un véhicule automobile, du genre comportant au moins un média filtrant et une grille réalisée en polypropylène, caractérisé par le fait que la grille comprend une charge minérale destinée à réduire la vitesse de propagation d'une flamme.

Avantageusement, la charge minérale, produit naturel extrait par exploitation minière, est un silicate de métal alcalino-terreux, par exemple de magnésium ; de préférence, c'est du silicate de magnésium naturel, ou talc ou de la craie.

Ainsi, la grille est réalisée de manière plus économique car la quantité de charge minérale comprise dans la grille, réduit d'autant la quantité de polypropylène nécessaire à la fabrication de la grille, le polypropylène étant d'un coût supérieur à la charge minérale.

La charge minérale ne brûlant pas, elle a pour effet de retarder la propagation de la flamme.

De préférence, la quantité de charge minérale est comprise entre 10 et 40% en poids, avantageusement entre 20 et 30% en poids.

De préférence, le média filtrant comprend un mat de non tissé constitué d'un voile de carde.

Avantageusement, ledit mat de non tissé constitué d'un voile de carde est appliqué contre ladite grille.

De préférence, ledit voile de carde forme une nappe unique.

Avantageusement, ledit voile de carde est placé en amont de la grille en considérant le sens normal de passage du gaz à filtrer.

De préférence, le dispositif de filtration comporte des moyens d'adsorption de gaz placés entre la grille et ledit mat de non tissé.

Avantageusement, lesdits moyens d'adsorption comportent un tissu de carbone activé.

Avantageusement, lesdits moyens d'adsorption comportent un lit de charbon activé.

De préférence, un mat de non tissé constitué d'un voile de carde est disposé de part et d'autre des moyens d'adsorption.

Avantageusement, une seconde grille, dite grille d'entrée, est disposée en amont du mat de non tissé.

De préférence, les deux grilles sont de même nature et comprennent toutes deux une charge minérale.

De préférence, le mat de non tissé est à base de fibres longues dont la longueur est, de préférence, au moins égale à 38 mm.

Avantageusement, lesdites fibres longues présentent un diamètre moyen au moins égal à 1 µm.

De préférence, lesdites fibres longues sont en matériau thermoplastique.

Avantageusement, lesdites fibres longues sont des fibres de polypropylène.

De préférence, le cadre est en polypropylène.

Plus précisément, le dispositif de filtration comporte une grille avantageusement plissée contre laquelle est disposé, sans lui être solidarisé, un média filtrant formant filtre à particules, formé d'un mat de non tissé constitué d'un voile de carde en une nappe unique. Le média filtrant est lui-même plissé de la même manière que la grille.

Ledit mat de non tissé est à base de fibres longues dont la longueur est, de préférence, au moins égale à 38 mm. Lesdites fibres longues présentent un diamètre moyen au moins égal à 1 µm. Lesdites fibres sont en matériau thermoplastique et, en pratique, en polypropylène.

La grille est en polypropylène. Elle se trouve placée en aval par rapport au sens de circulation de l'air dans le dispositif de filtration. Selon l'invention, la grille comprend une charge minérale destinée à réduire la vitesse de propagation d'une flamme ; de bons résultats ont été obtenus avec des silicates de magnésium ; de préférence, on choisit le silicate naturel ou talc ; un tel produit n'est ni toxique, ni onéreux.

Avantageusement, la quantité de charge minérale est comprise entre 10 et 40% en poids, mieux entre 20 et 30 % en poids, lors de l'opération de granulation ; les granulés sont ensuite introduits dans une extrudeuse propre à réaliser des grilles en thermoplastique, mettant en oeuvre des procédés connus, tels que ceux connus commercialement sous la dénomination Diamond (marque commerciale déposée) ou Trical (marque commerciale déposée) ou autres.

De préférence, la grille est emprisonnée dans le média.

Une seconde grille plissée peut être prévue en sorte que le média filtrant se trouve placé entre les grilles sans être solidarisé ni à l'une ni à l'autre des deux grilles.

De préférence, la seconde grille dite d'entrée est placée en amont du média selon le sens de circulation de l'air dans le dispositif de filtration.

Avantageusement, la seconde grille est de même nature que la grille souple et est en polypropylène ; avantageusement, elle contient également une charge minérale.

En variante, les deux grilles sont de natures différentes.

Le dispositif de filtration constitue un filtre à particules.

L'invention concerne aussi un filtre dit combiné, c'est-à-dire à la fois un filtre à particules et un filtre arrêtant des gaz délétères.

Dans ce cas, à la structure de base constituée de la grille aval et du média, sont ajoutés des moyens d'adsorption de gaz placés entre deux média en sorte d'avoir successivement, dans le sens de circulation de l'air, le média, les moyens d'adsorption de gaz et un deuxième média.

Un filtre combiné comporte avantageusement successivement, dans le sens de circulation de l'air, une grille d'entrée, un média, des moyens d'adsorption de gaz, un média et une grille de sortie. Les média sont avantageusement de la même nature, comme celle décrite précédemment. De la sorte, deux mats de non tissé constitués chacun d'un voile de carde sont disposés respectivement de part et d'autre des moyens d'adsorption de gaz.

La grille peut également être centrale.

Lesdits moyens d'adsorption de gaz peuvent comporter un lit de charbon activé, mais, de préférence, ils comprennent un tissu de carbone plissé de la même manière que la grille et que le média.

Lorsque le dispositif de filtration présente une construction symétrique, celle-ci permet avantageusement son montage indifféremment dans un sens ou dans l'autre dans un appareil de chauffage et/ou ventilation et/ou climatisation, ce qui rend inutile de prévoir, dans ce cas, un détrompeur pour le sens de montage. Le dispositif de filtration est ainsi réversible. Bien entendu, dans ce cas, la grille d'entrée peut jouer le rôle de grille de sortie et, inversement, la grille de sortie jouer le rôle de grille d'entrée.

Un cadre est prévu pour supporter les différents constituants du dispositif de filtration.

Le cadre est réalisé par exemple en polypropylène et est solidarisé à la grille de sortie ou à la grille d'entrée, et de préférence aux deux grilles quand toutes les deux sont prévues.

La solidarisation d'une grille au cadre s'effectue avantageusement par une opération dite de soudure miroir qui consiste à chauffer simultanément jusqu'au début de fusion une partie périphérique de la grille et du média, d'une part, et une portion du cadre correspondant à la zone de fixation, d'autre part, puis à rapprocher et serrer l'une contre l'autre cette partie périphérique et cette portion de manière à exercer une pression relative.

L'opération de soudure miroir est conduite de telle manière que l'extrémité latérale de la grille soit amenée à se plier à angle droit pour épouser la face interne correspondante du cadre, ce qui a pour avantage d'assurer une meilleure fixation de la grille et d'éviter toute fuite d'air entre grille et cadre.

Avantageusement, plusieurs parties périphériques et portions correspondantes, de la grille, du média et du cadre, sont ainsi fixées entre elles.

La même nature chimique, ici du polypropylène, de la grille et du cadre permet une fixation solide et durable.

Lors de l'opération de soudure miroir, le ou les mats de non tissé sont apposés contre la ou les grilles correspondantes avec, le cas échéant, interposition de la manière décrite précédemment, de moyens d'adsorption tels que, de préférence, un tissu de carbone.

En variante, le cadre est moulé autour de la grille ou des deux grilles ainsi que sur le ou les médias filtrants.

Un procédé préférentiel de fabrication d'un dispositif de filtration est le suivant.

Des fibres de polypropylène d'une finesse de 1,7 dtex (diamètre 14 µm) coupées à une longueur de 40 mm sont introduites dans un mélangeur.

Le mélange de fibres obtenu est ensuite introduit dans une démoteuse puis dans un silo de stockage avant d'être cardé au moyen d'une carde de type laine à double peigneur équipée d'un brouilleur de type pêle-mêle afin d'obtenir un voile de carde isotrope.

Le voile est, en sortie de carde, introduit dans un condenseur pour former une nappe.

Les paramètres de la carde et du condenseur sont choisis de manière à obtenir une nappe présentant une masse surfacique d'environ 20 à 150 g/m².

La nappe est déposée sur un tapis puis consolidée par une opération de liage hydraulique.

L'opération de liage hydraulique consiste à faire traverser la nappe disposée sur un tambour rotatif par des jets d'eau très fins sous haute pression, comprise entre 40 et 200 bars.

En rebondissant sur le tambour, les jets d'eau provoquent un nouage des fibres conférant à la nappe une résistance mécanique importante sans pour autant en augmenter, de manière conséquente, la densité.

Après passage dans un tunnel de séchage, la nappe est enroulée.

La nappe est ensuite reprise pour subir une opération de plissage et se trouve alors prête à être montée sur un support pour former le dispositif de filtration comme indiqué précédemment.

Le dispositif de filtration comporte une nappe en une seule couche ; de la sorte, avec une nappe de 0,84 mm d'épaisseur, on a pu former un filtre présentant une masse surfacique de 66 g/m² et de densité 0,07.

Pour tester l'efficacité du filtre ainsi réalisé, on a placé ce dernier en travers d'une veine de section égale à 100 cm², parcourue par un courant d'air chargé de particules à une vitesse de 20 cm/s.

Les particules correspondent à une poudre dite "poudre SAE fine" qui est définie par la norme des Etats-Unis d'Amérique, référence SAE J 726/ISO 5011.

La concentration de particules est de 100 mg/m³.

On constate, d'une part, que la perte de charge au travers du filtre n'est, dans ces conditions, que de 14 Pa et que, d'autre part, l'efficacité atteint 80 %.

Par rapport aux dispositifs de filtration actuellement sur le marché, on a obtenu une efficacité comparable aux meilleurs d'entre eux avec un produit d'une densité beaucoup plus faible (0,07 contre 0,12 à 0,30) et engendrant une perte de charge nettement plus faible.

Des tests d'endurance ont en outre démontré une plus grande stabilité dans le temps de l'efficacité du dispositif de filtration.

Dans ce qui précède, le média filtrant comprend un mat de non tissé mais, comme on le comprend aisément, l'invention s'applique quel que soit le type de média filtrant qui peut comprendre, par exemple, un voile de carde consolidé par liage hydraulique associé audit mat ; en variante, il s'agit d'un complexe fibreux comprenant deux couches de non-tissé entre lesquelles est disposée une grille de renforcement, l'ensemble étant solidarisé par interpénétration des deux couches de non-tissé.

De même, la grille et le média filtrant peuvent être solidarisé localement de manière ciblée au moins par une soudure par fusion, tel qu'une soudure par ultrasons ou une soudure réalisée à l'aide d'une mollette chauffante comme décrit dans la demande FR 01 12641 déposée le 2 octobre 2001. Ainsi, lors de la soudure par fusion, le risque d'incendie est diminué, étant donné que l'opération de soudure par fusion est très brève et que la présence des charges minérales dans la grille ont pour effet de retarder la flamme.

De même, s'agissant du cadre, celui-ci peut être un encadrement total ou partiel réalisé par collage, soudage, surmoulage ou autre, amovible ou non.

## Revendications

1. Dispositif de filtration destiné à équiper un appareil d'aération et/ou de chauffage et/ou de climatisation, notamment pour un véhicule automobile, du genre comportant au moins un média filtrant et une grille réalisée en polypropylène, **caractérisé par le fait que** la grille comprend une charge minérale destinée à réduire la vitesse de propagation d'une flamme.

2. Dispositif de filtration selon la revendication 1, **caractérisé par le fait que** la charge minérale est un silicate de métal alcalino-terreux.

3. Dispositif de filtration selon la revendication 2, **caractérisé par le fait que** la charge minérale est un silicate de magnésium.

4. Dispositif de filtration selon la revendication 3, **caractérisé par le fait que** le silicate de magnésium est le silicate de magnésium naturel ou talc.

5. Dispositif de filtration selon l'une des revendications 1 à 4, **caractérisé par le fait que** la quantité de charge minérale est comprise entre 10 et 40% en poids.

6. Dispositif de filtration selon la revendication 5, **caractérisé par le fait que** la quantité de charge minérale est comprise entre 20 et 30% en poids.

7. Dispositif de filtration selon l'une des revendications 1 à 6, **caractérisé par le fait que** le média filtrant comprend un mat de non tissé constitué d'un voile de carde.

8. Dispositif de filtration selon la revendication 7, **caractérisé par le fait que** ledit m at de non t issé c onstitué d'un voile d e carde est appliqué contre ladite grille.

9. Dispositif de filtration selon l'une des revendications 7 ou 8, **caractérisé par le fait que** ledit voile de carde forme une nappe unique.

10. Dispositif de filtration selon l'une des revendications 7 à 9, **caractérisé par le fait que** ledit voile de carde est placé en amont de la grille en considérant le sens normal de passage du gaz à filtrer.

11. Dispositif de filtration selon l'une des revendications 7 à 10, **caractérisé par le fait qu'**il comporte des moyens d'adsorption de gaz placés entre la grille et ledit mat de non tissé.

12. Dispositif de filtration selon la revendication 11, **caractérisé par le fait que** lesdits moyens d'adsorption comportent un tissu de carbone activé.

13. Dispositif de filtration selon la revendication 11, **caractérisé par le fait que** lesdits moyens d'adsorption comportent un lit de charbon activé.

14. Dispositif de filtration selon l'une des revendications 11 à 13, **caractérisé par le fait qu'**un mat de non tissé constitué d'un voile de carde est disposé de part et d'autre des moyens d'adsorption.

15. Dispositif de filtration selon l'une des revendications 7 à 14, **caractérisé par le fait qu'**une seconde grille, dite grille d'entrée, est disposée en amont du mat de non tissé.

16. Dispositif de filtration selon la revendication 15, **caractérisé par le fait que** les deux grilles sont de même nature et comprennent toutes deux une charge minérale.

17. Dispositif de filtration selon l'une quelconque des revendications 7 à 16, **caractérisé par le fait que** le mat de non tissé est à base de fibres longues dont la longueur est, de préférence, au moins égale à 38 mm.

18. Dispositif de filtration selon la revendication 17, **caractérisé par le fait que** lesdites fibres longues présentent un diamètre moyen au moins égal à 1µm.

19. Dispositif de filtration selon l'une des revendications 17 ou 18, **caractérisé par le fait que** lesdites fibres longues sont en matériau thermoplastique.

20. Dispositif de filtration selon l'une des revendications 17 à 19, **caractérisé par le fait que** lesdites fibres longues sont des fibres de polypropylène.

21. Dispositif de filtration selon l'une des revendications 1 à 20, **caractérisé par le fait que** le dispositif comprend un cadre et le cadre est en polypropylène.

## Patentansprüche

1. Filtervorrichtung zur Ausrüstung einer Belüftungs- und/oder Heizungsund/oder Klimaanlage, insbesondere für Kraftfahrzeuge, die wenigstens ein Filtermedium und ein aus Polypropylen ausgeführtes Gitter umfasst, **dadurch gekennzeichnet, dass das** Gitter einen mineralischen Füllstoff enthält, der dazu bestimmt ist, die Ausbreitungsgeschwindigkeit einer Flamme zu verringern.

2. Filtervorrichtung nach Anspruch 1, **dadurch gekennzeichnet, dass** der mineralische Füllstoff ein Silikat eines Erdalkalimetalls ist.

3. Filtervorrichtung nach Anspruch 2, **dadurch gekennzeichnet, dass** der mineralische Füllstoff ein Magnesiumsilikat ist.

4. Filtervorrichtung nach Anspruch 3, **dadurch gekennzeichnet, dass** das Magnesiumsilikat natürliches Magnesiumsilikat oder Talkum ist.

5. Filtervorrichtung nach einem der Ansprüche 1 bis 4, **dadurch gekennzeichnet, dass** die Menge des mineralischen Füllstoffs zwischen 10 und 40 Gewichtsprozent enthalten ist.

6. Filtervorrichtung nach Anspruch 5, **dadurch gekennzeichnet, dass** die Menge des mineralischen Füllstoffs zwischen 20 und 30 Gewichtsprozent liegt.

7. Filtervorrichtung nach einem der Ansprüche 1 bis 6, **dadurch gekennzeichnet, dass** das Filtermedium eine Faservliesmatte umfasst, die aus einem Krempelvlies besteht.

8. Filtervorrichtung nach Anspruch 7, **dadurch gekennzeichnet, dass** die aus einem Krempelvlies bestehende Faservliesmatte gegen das besagte Gitter angedrückt ist.

9. Filtervorrichtung nach einem der Ansprüche 7 oder 8, **dadurch gekennzeichnet, dass** das besagte Krempelvlies eine einheitliche Lage bildet.

10. Filtervorrichtung nach einem der Ansprüche 7 bis 9, **dadurch gekennzeichnet, dass** das besagte Krempelvlies mit Blick auf die normale Durchgangsrichtung des zu filternden Gases vor dem Gitter angebracht ist.

11. Filtervorrichtung nach einem der Ansprüche 7 bis 10, **dadurch gekennzeichnet, dass** sie Gasadsorptionsmittel umfasst, die zwischen dem Gitter und der besagten Faservliesmatte angebracht sind.

12. Filtervorrichtung nach Anspruch 11, **dadurch gekennzeichnet, dass** die besagten Adsorptionsmittel ein Aktivkohlegewebe umfassen.

13. Filtervorrichtung nach Anspruch 11, **dadurch gekennzeichnet, dass** die besagten Adsorptionsmittel ein Aktivkohlebett umfassen.

14. Filtervorrichtung nach einem der Ansprüche 11 bis 13, **dadurch gekennzeichnet, dass** eine aus einem Krempelvlies bestehende Faservliesmatte beiderseits der Adsorptionsmittel angeordnet ist.

15. Filtervorrichtung nach einem der Ansprüche 7 bis 14, **dadurch gekennzeichnet, dass** ein als Einlassgitter bezeichnetes zweites Gitter vor der Faservliesmatte angeordnet ist.

16. Filtervorrichtung nach Anspruch 15, **dadurch gekennzeichnet, dass** die zwei Gitter die gleiche Beschaffenheit aufweisen und beide einen mineralischen Füllstoff enthalten.

17. Filtervorrichtung nach einem der Ansprüche 7 bis 16, **dadurch gekennzeichnet, dass** die Faservliesmatte auf der Basis von Langfasern ausgeführt ist, deren Länge vorzugsweise mindestens gleich 38 mm ist.

18. Filtervorrichtung nach Anspruch 17, **dadurch gekennzeichnet, dass** die besagten Langfasern einen mittleren Durchmesser mindestens gleich 1 µm aufweisen.

19. Filtervorrichtung nach einem der Ansprüche 17 oder 18, **dadurch gekennzeichnet, dass** die besagten Langfasern aus Thermoplast bestehen.

20. Filtervorrichtung nach einem der Ansprüche 17 bis 19, **dadurch gekennzeichnet, dass** die besagten Langfasern Polypropylenfasern sind.

21. Filtervorrichtung nach einem der Ansprüche 1 bis 20, **dadurch gekennzeichnet, dass** die Vorrichtung einen Rahmen umfasst und der Rahmen aus Polypropylen besteht.

## Claims

1. A filter for use with apparatus for ventilation and/or heating and/or air conditioning, especially for a motor vehicle, of the kind comprising at least one filter medium and a grid made of polypropylene, **characterised by** the fact that the grid includes a mineral filler designed to reduce the propagation velocity of a flame.

2. A filter according to Claim 1, **characterised by** the fact that the mineral filler is an alkaline earth metal silicate.

3. A filter according to Claim 2, **characterised by** the fact that the mineral filler is a magnesium silicate.

4. A filter according to Claim 3, **characterised by** the fact that the magnesium silicate is natural magnesium silicate or talc.

5. A filter according to one of Claims 1 to 4, **characterised by** the fact that the quantity of mineral filler is in the range between 10 and 40% by weight.

6. A filter according to Claim 5, **characterised by** the fact that the quantity of mineral filler is in the range between 20 and 30% by weight.

7. A filter according to one of Claims 1 to 6, **characterised by** the fact that the filter medium includes a non-woven mat in the form of a carded web.

8. A filter according to Claim 7, **characterised by** the fact that the said non-woven mat consisting of a carded web is applied against the said grid.

9. A filter according to Claim 7 or Claim 8, **characterised by** the fact that the said carded web constitutes a single layer.

10. A filter according to one of Claims 7 to 9, **characterised by** the fact that the said carded web is placed upstream of the grid in relation to the normal direction of passage of the gas being filtered.

11. A filter according to one of Claims 7 to 10, **characterised by** the fact that it includes gas adsorption means placed between the grid and the said non-woven mat.

12. A filter according to Claim 11, **characterised by** the fact that the said adsorption means comprise a web of activated carbon.

13. A filter according to Claim 11, **characterised by** the fact that the said adsorption means comprise a bed of activated carbon.

14. A filter according to one of Claims 11 to 13, **characterised by** the fact that one non-woven mat consisting of a carded web is disposed on either side of the adsorption means.

15. A filter according to one of Claims 7 to 14, **characterised in that** a second grid, that is to say an inlet grid, is disposed upstream of the non-woven mat.

16. A filter according to Claim 15, **characterised by** the fact that the two grids are of the same nature and both include a mineral filler.

17. A filter according to any one of Claims 7 to 16, **characterised by** the fact that the non-woven mat is based on long fibres the length of which is preferably at least equal to 38 millimetres.

18. A filter according to Claim 17, **characterised by** the fact that the said long fibres have a mean diameter at least equal to 1 µm.

19. A filter according to Claim 17 or Claim 18, **characterised in that** the said long fibres are of thermoplastic material.

20. A filter according to one of Claims 17 to 19, **characterised in that** the said long fibres are polypropylene fibres.

21. A filter according to one of Claims 1 to 20, **characterised by** the fact that the filter includes a frame, and the frame is of polypropylene.
